Europäisches Patentamt

European Patent Office

Office européen des brevets

(19)

(11) Publication number: 0 358 441
A2

# (12) EUROPEAN PATENT APPLICATION

(21) Application number: 89308961.5

(22) Date of filing: 05.09.89

(51) Int. Cl.⁵: H 04 N 1/32
H 04 L 12/10

(30) Priority: 06.09.88 JP 223902/88

(43) Date of publication of application:
14.03.90 Bulletin 90/11

(84) Designated Contracting States:
DE ES FR GB IT NL

(71) Applicant: CANON KABUSHIKI KAISHA
30-2, 3-chome, Shimomaruko
Ohta-ku Tokyo (JP)

(72) Inventor: Nakajima, Toshifumi Higashi Haitsu 102
3-25, Kaminoge 1-chome Setagaya-ku
Tokyo (JP)

Koizumi, Shigeru
10-102, Higashi Takasago-cho 7-chome
Urawa-shi Saitama-ken (JP)

Kurita, Kenji
8-407, Nishi Izumi 1-chome
Komae-shi Tokyo (JP)

Kurosawa, Yuji
Canon Daini Shinjyoryo 773, Chitose Takatsu-ku
Kawasaki-shi Kanagawa-ken (JP)

(74) Representative: Beresford, Keith Denis Lewis et al
BERESFORD & Co. 2-5 Warwick Court High Holborn
London WC1R 5DJ (GB)

(54) Communication apparatus.

(57) A communication apparatus includes a unit for starting
power supply in accordance with external conditions, a unit for
supplying power to the apparatus in accordance with a signal
from the starting unit, and a unit for stopping power supply by
the power supply unit after a predetermined operation such as a
communication operation is completed.

FIG. 1

## Description

### Communication Apparatus

## BACKGROUND OF THE INVENTION:

### Field of the Invention

The present invention relates to a communication apparatus and, more particularly, to power supply of a communication apparatus.

### Related Background Art

A conventional communication apparatus, e.g., a facsimile apparatus is arranged as follows because the apparatus has an automatic receive function.

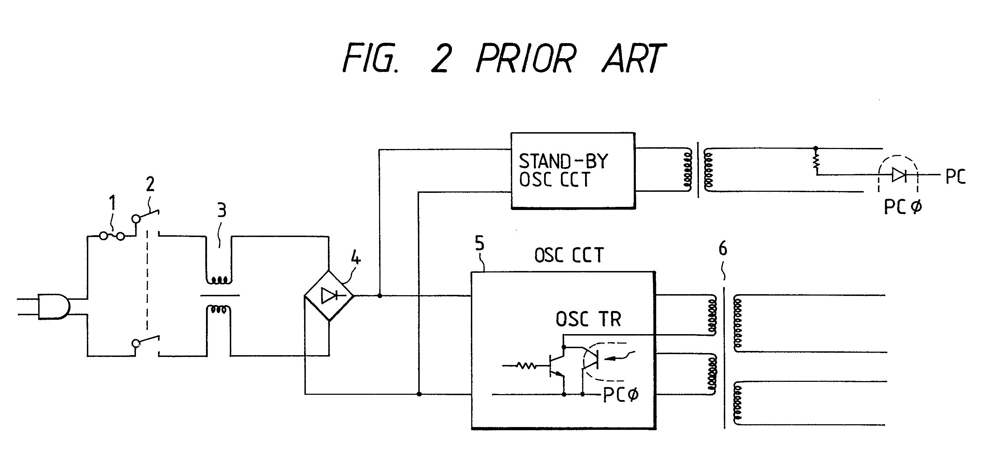

(1) A stand-by power source function is provided for a power source unit so that part of power is supplied during a wait period and total power is supplied upon automatic receive operation (as in a middle- or high-class machine shown in Fig. 2).

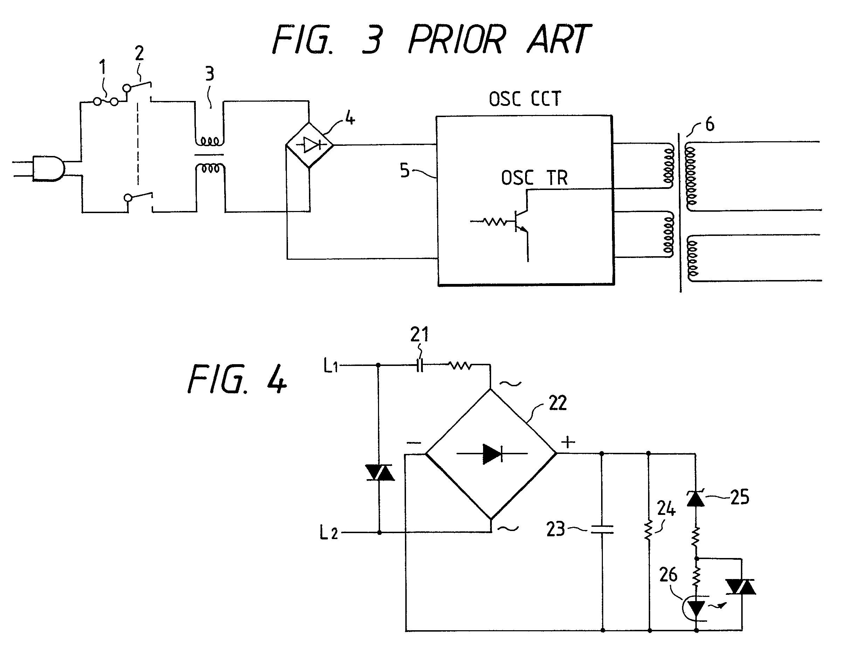

(2) Total power is normally supplied from a power source unit (as in a lower-class machine shown in Fig. 3).

In the apparatus of item (1) described above, however, an arrangement of the power source unit is complicated, and the manufacturing cost is increased.

In the apparatus of item (2), although an arrangement of the power source unit is simplified and the manufacturing cost is low, power consumption during a stand-by period is increased. In addition, this apparatus has problems of heat dissipation and safety during the stand-by period.

## SUMMARY OF THE INVENTION

It is an object of the present invention to solve the above conventional problems and improve a communication apparatus.

It is another object of the present invention to provide a communication apparatus which does not consume much power during a stand-by period of the apparatus.

It is still another object of the present invention to provide a communication apparatus which starts power supply in accordance with external conditions such as reception of a calling signal or an operation start instruction and stops power supply upon completion of an operation.

It is still another object of the present invention to provide a communication apparatus which starts oscillation of an oscillation power source circuit in accordance with the external conditions as described above and stops oscillation of the power source circuit upon completion of an operation.

The other objects of the present invention will become apparent from the following detailed description of embodiments and accompanying drawings.

## BRIEF DESCRIPTION OF THE DRAWINGS

Fig. 1 is a block diagram showing an arrangement of a first embodiment of the present invention;

Fig. 2 is a block diagram showing an arrangement of the conventional apparatus (1);

Fig. 3 is a block diagram showing an arrangement of the conventional apparatus (2);

Fig. 4 is a circuit diagram showing an arrangement of a shaping circuit of the first embodiment;

Fig. 5 is a flow chart for explaining a control operation of a CPU of the first embodiment;

Fig. 6 is a block diagram showing an arrangement of a second embodiment of the present invention;

Fig. 7 is a flow chart for explaining a control operation of a CPU of the second embodiment;

Fig. 8 is a block diagram showing an arrangement of a third embodiment of the present invention;

Fig. 9 is a block diagram showing an arrangement of a fourth embodiment of the present invention; and

Fig. 10, consisting of Figs. 10A and 10B is a flow chart for explaining a control operation of a CPU of the fourth embodiment.

## DETAILED DESCRIPTION OF THE PREFERRED EMBODIMENTS

Preferred embodiments of the present invention will be described in detail below with reference to the accompanying drawings.

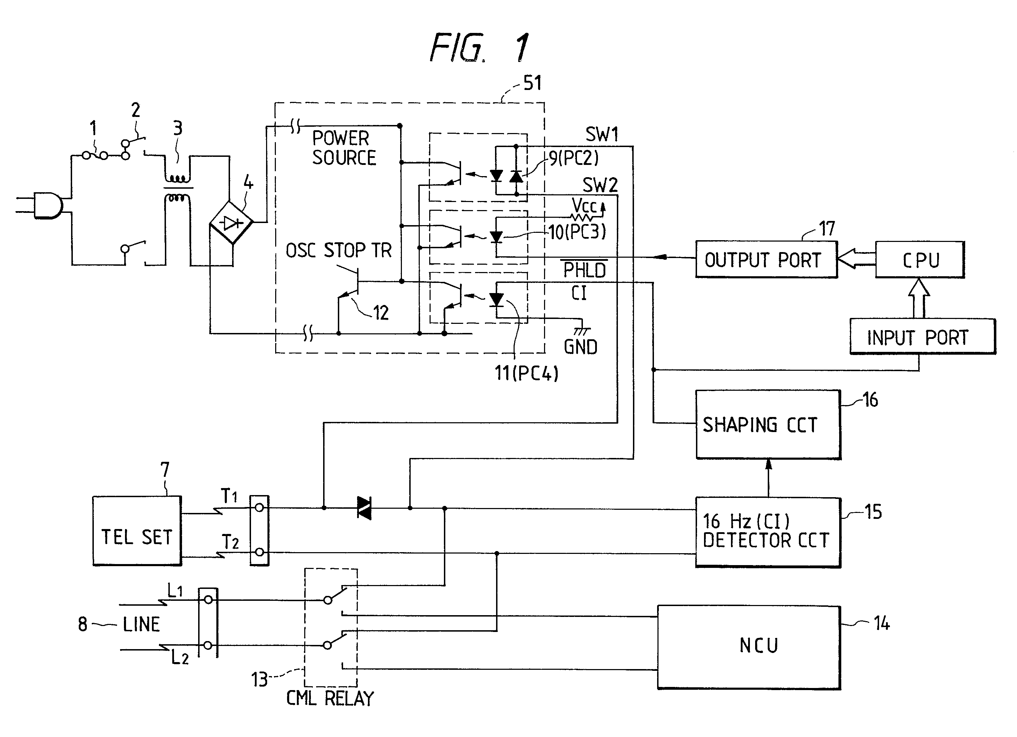

Fig. 1 is a block diagram showing an arrangement of the first embodiment. Referring to Fig. 1, a fuse 1 for preventing an overcurrent, a power source switch 2, a line filter 3, and a rectifier circuit 4 are connected to an oscillation circuit 51. A telephone set 7 and a line 8 are also included in the apparatus. A transistor 12 for controlling an oscillation operation is normally ON to stop oscillation of the oscillation circuit 51 of a power source. When oscillation of the oscillation circuit 51 is stopped, no power is supplied to the apparatus. Photocouplers 9, 10, and 11 ON/OFF-control the oscillation stop transistor 12. A light-emitting portion of the photocoupler 9 (PC2) includes bidirectional photodiodes and is connected in series with one of lines L1 and L2.

When the line is open, no current flows through the light-emitting portion of the PC2. When a handset of the telephone set 7 is taken from the hook to close the line, however, a DC loop is formed, and the light-emitting portion of the PC2 emits light to turn off the oscillation stop transistor 12, thereby starting oscillation. A signal 17 is supplied from an I/O port of a control unit (CPU) of a main body of a facsimile apparatus. That is, the signal 17 is generated under the control of the CPU (comprising a microcomputer) which is activated immediately after the power source is enabled. This signal is active at low level ("0" level). When a signal $\overline{PHLD}$ goes to low level, the oscillation stop transistor 12 is turned off, and oscillation is started. When a calling signal (16 Hz) is sent from the line, a light-emitting portion of the photocoupler 11 emits light to turn off the oscillation stop transistor 12, thereby starting oscillation. The communication apparatus also includes a 16-Hz (CI) detector circuit 15 and a shaping circuit 16 for integrating a signal CI and supplying a current to the light-emitting portion of the photocoupler 11 (PC4) for a predetermined time. A network control unit (NCU) 14 controls a network of the communication apparatus.

Fig. 4 is a circuit diagram showing the shaping circuit 16 shown in Fig. 1. The shaping circuit 16 comprises a DC cut capacitor 21, a rectifier circuit 22, a smoothing capacitor 23, and a resistor 24 having a large resistance for discharging the capacitor 23, a Zener diode 25 for identifying the signal CI (calling signal), and a light-emitting portion 26 of the photocoupler 10 (PC3) shown in Fig. 1. A signal which responds to the signal CI (16 Hz) is obtained by integrating the CI by these circuits.

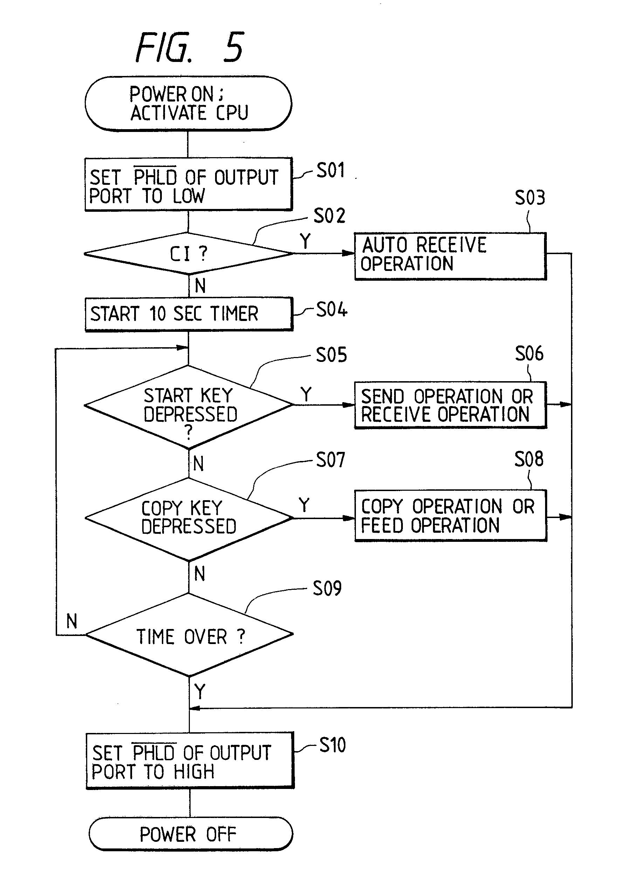

An operation of the first embodiment will be described below with reference to a flow chart shown in Fig. 5. When oscillation of the power source is started to activate the CPU of the communication apparatus, the signal $\overline{PHLD}$ from the OUT port 17 is fixed at low level to continue oscillation of the power source in step S01. In step S02, the CPU checks in accordance with a signal from the 16-Hz detector circuit 15 whether the signal CI (16 Hz) is sent. If the signal CI is detected in step S02, the flow advances to an automatic receive operation in step S03. If the signal CI is not sent, a 10-sec timer is started in step S04, and the CPU checks in step S05 whether a start key (not shown) is depressed. If the start key is depressed, the flow advances to a send or receive operation in accordance with the presence/absence of an original sheet. If the start key is not depressed, depression of a copy key (not shown) is checked in step S07. If the copy key is depressed, the flow advances to a copy or feed operation in accordance with the presence/absence of an original sheet in step S08. If the copy key is not depressed, time over of ten seconds is checked in step S09. If time over is not determined, the flow returns to step S05. If time over is determined, the signal $\overline{PHLD}$ from the OUT port 17 is set at high level in step S10. As a result, oscillation of the oscillation circuit 51 of the power source is stopped, and power supply to the communication apparatus is stopped accordingly. Note that after the operation is completed in step S03, S06, or S08, the signal $\overline{PHLD}$ is set at high level in step S10, and the power source is disabled.

That is, in accordance with external conditions such as reception of a calling signal or off-hook of the telephone set 7, the transistor 12 is turned off, the oscillation circuit 51 of the power source unit starts oscillation to supply power to the apparatus. When a communication or copy operation is completed, the transistor 12 is turned on to stop oscillation of the oscillation circuit, thereby stopping power supply.

A second embodiment of the present invention will be described below.

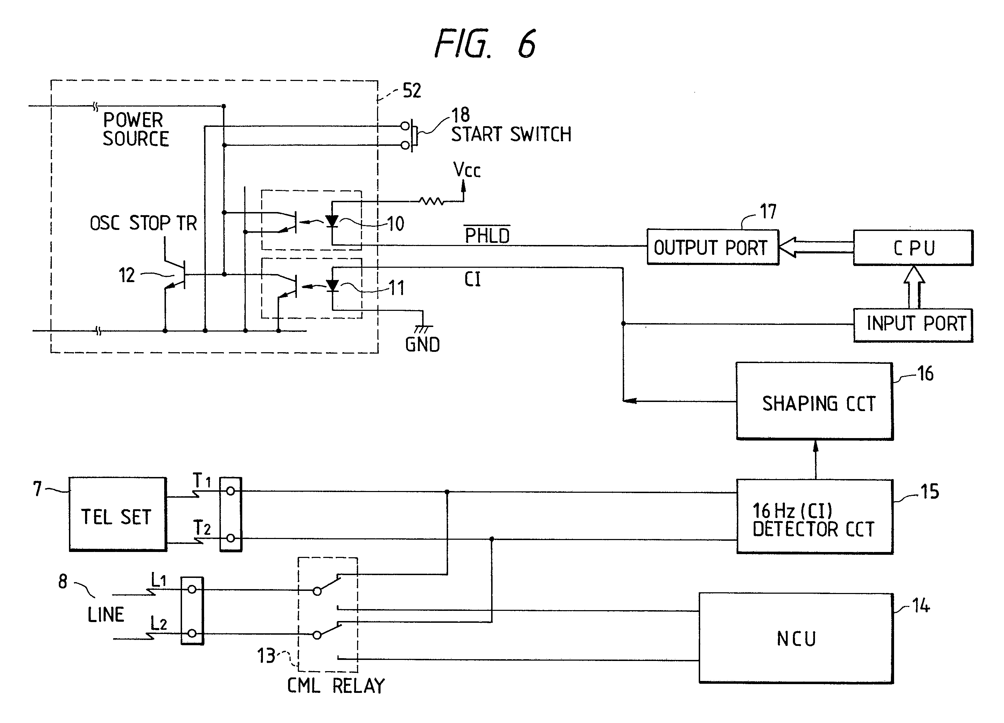

Fig. 6 is a block diagram showing an arrangement of the second embodiment different from the first embodiment in an arrangement after an oscillation circuit 52. Referring to Fig. 6, a start switch 18 is mechanically arranged. Note that this switch automatically returns (opens) when a predetermined time elapses after it is depressed. When a user depresses the start switch 18 of the communication apparatus, an oscillation stop transistor 12 is turned off to start oscillation.

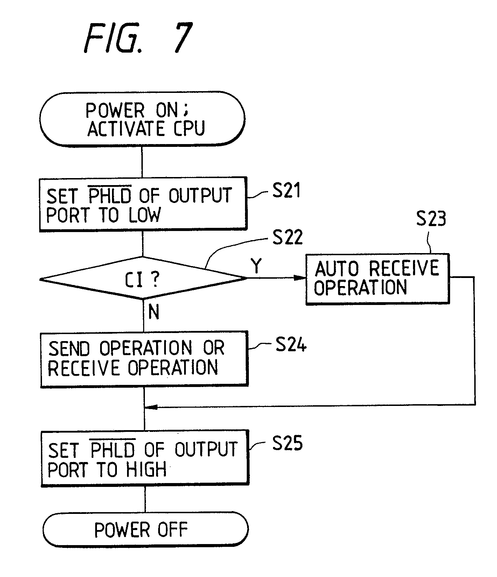

Fig. 7 is a flow chart for explaining a control operation of a CPU of the second embodiment. Referring to the flow chart shown in Fig. 7, in step S21, after the CPU is activated, it fixes a signal $\overline{PHLD}$ at an output port to low level to continue oscillation. In step S22, the CPU checks whether a signal CI is sent or not. If the signal CI is detected, the flow advances to an automatic receive operation in step S23. If the signal CI is not detected, a send or receive operation is performed in step S24 in accordance with the presence/absence of a original sheet. After these operations are completed, the signal $\overline{PHLD}$ is set at high level to stop oscillation in step S25.

Another power source circuit system for reducing power consumption during a stand-by period to substantially "0" will be described below.

In the above embodiments, a switching power source is used as the power source. In the following embodiment, a dropper type power source utilizing a commercial transformer will be described.

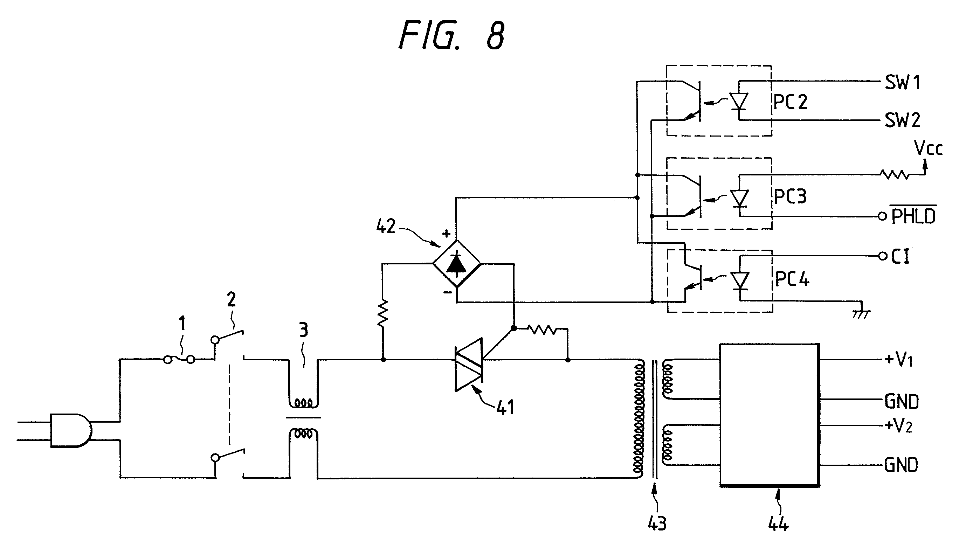

Fig. 8 is a block diagram showing an arrangement of the third embodiment adopting the dropper type power source. Referring to Fig. 8, this apparatus includes a triac 41, a bridge diode 42, a commercial transformer 43, and a smoothing/stabilizing circuit 44 at the secondary side of the commercial transformer.

An operation will be described below. Normally, when phototransistors of photocouplers PC2, PC3, and PC4 are OFF, no current flows through the bridge diode 42, and the triac 41 is kept OFF. Therefore, no current flows through the transformer 43, and an output from the smoothing/stabilizing circuit 44 is zero.

When a handset of a telephone set is taken from the hook and the PC2 emits light, the phototransistor is turned on to supply a current to the bridge diode 42, and the current flows through the gate of the triac 41, thereby turning on the triac. In this manner, since the current flows through the commercial transformer, a DC output is obtained from the smoothing/stabilizing circuit 44. As a result, a CPU starts operation, and a signal $\overline{PHLD}$ is kept at low level, thereby maintaining power supply to the triac 41.

The triac 41 can also be turned on by the PC4 which emits light in accordance with a signal CI. In this case, power supply to the triac 41 is maintained by the signal $\overline{PHLD}$ as in the above operation.

In order to turn off the power source output after a series of operations are completed, the CPU sets the signal $\overline{PHLD}$ at high level to turn off the photocoupler PC3, thereby stopping the gate current to the triac 41. Therefore, the triac 41 is turned off, and the secondary output of the transformer is also turned off.

A control operation of the CPU in the third embodiment is the same as that shown in the flow chart of Fig. 5.

The fourth embodiment of the present invention will be described below.

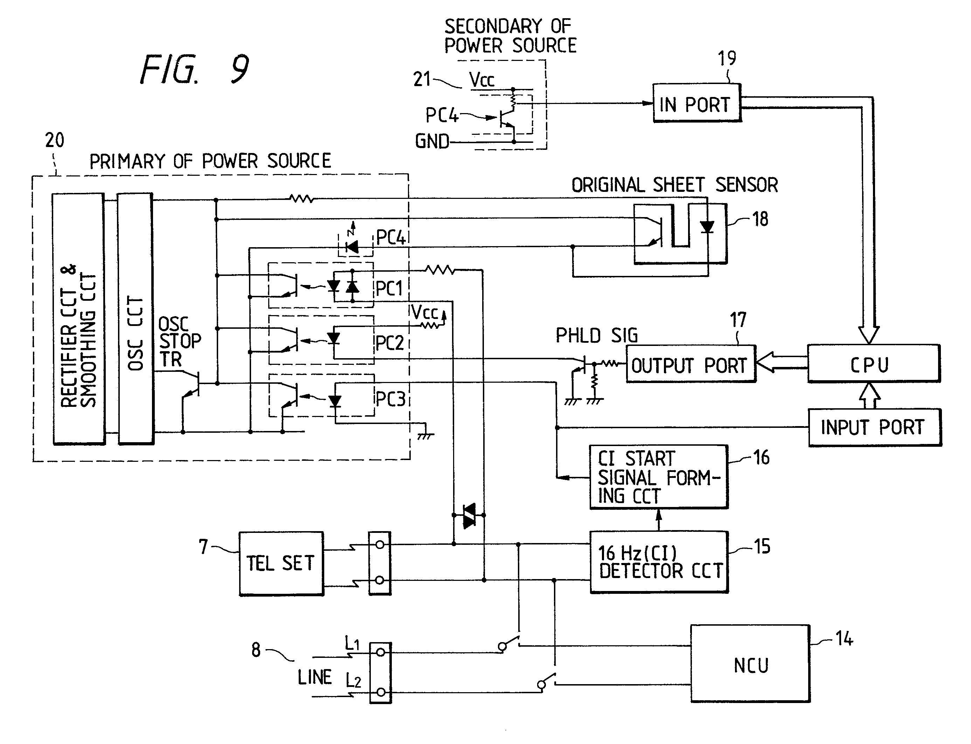

Fig. 9 is a block diagram showing an arrangement of the fourth embodiment.

Note that in Fig. 9, the same reference numerals as in Fig. 1 denote the same parts. Referring to Fig. 9, an original sheet sensor 18 supplies a current of several mA from the primary side of a power source to a light-emitting portion of a photointerruptor and starts oscillation of the power source in accordance with the presence/absence of an original sheet. A circuit 21 supplies information representing that the power source is caused to start oscillation by the original sheet sensor from the secondary side of the power source to a CPU. An IN port 19 receives this information signal. When a handset of a telephone set is taken from the hook to connect a DC loop, the power source detects this by a PC1 and starts oscillation. In this manner, an on-hook operation of oscillation of the power source is controlled by three photocouplers PC1, PC2, and PC3 and the photointerruptor (original sheet sensor) 18.

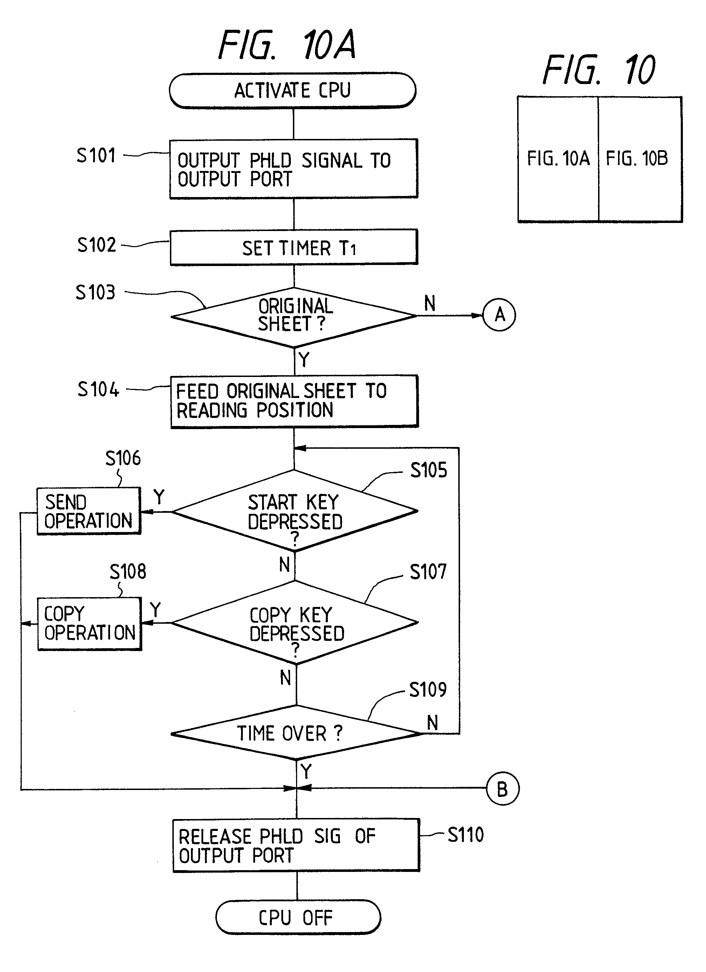

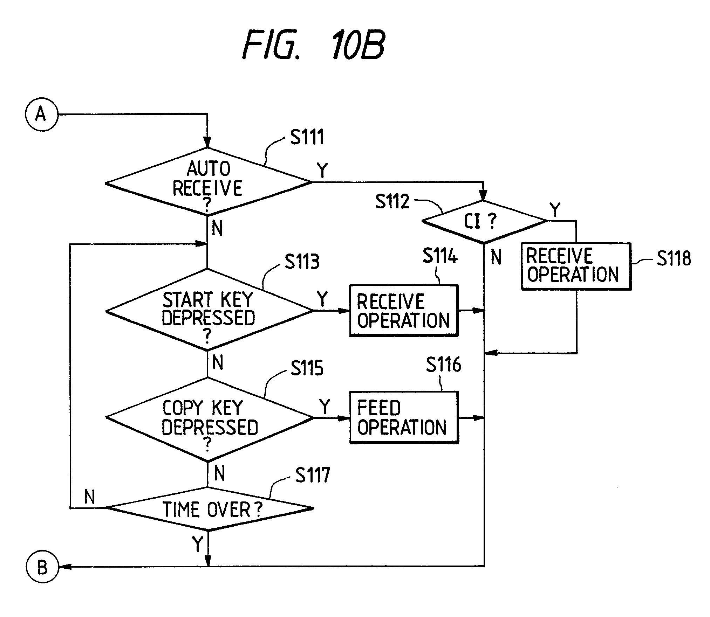

An operation of the CPU of the communication apparatus using the above power source will be described below with reference to a flow chart shown in Fig. 10.

When the CPU is activated, it outputs an active signal PHLD from an output port 17 in step S101. Therefore, oscillation of the power source is continued. In step S102, the CPU sets a predetermined value (e.g., 60 seconds), in a timer T1. This value is set in order to turn off oscillation of the power source upon time over. In step S103, in accordance with a signal supplied from the PC4 of the power source to the IN port 19 via the secondary circuit 21, the CPU checks whether an original sheet is present. If an original sheet is present, the flow advances to step S104. If an original sheet is not present, the flow advances to step S111. In step S104, the original sheet is fed to a reading position, and a routine loop for detecting start key depression, copy key depression, and time over in steps S105, S107, and S109, respectively, is performed. If start key depression is detected, a send operation is performed in step S106. After the send operation is completed, the signal PHLD at the OUT port is released, the power source stops oscillation, and the CPU stops an operation. Similarly, if copy key depression is detected, a copy operation is performed in step S108, and the signal PHLD is released in step S110. If time over is detected, the CPU similarly releases the signal PHLD in step S110 and stops an operation. If an original sheet is not present in step S103, the flow advances to step S112 when an automatic receive/manual receive switch on an operation panel is set to the automatic receive side; advances to step S113 when it is set to the manual receive side. In step S112, the CPU checks by the CI detector circuit 15 shown in Fig. 9 whether a signal CI is supplied. If the signal CI is detected, the flow advances to an automatic receive operation in step S118. If no signal CI is detected, the CPU determines that the input signal is noise, and the flow advances to step S110. If the switch on the operation panel is set to the manual receive side, a routine loop of detecting start key depression, copy key depression, and time over in steps S113, S115, and S117, respectively, is performed. If start key depression is detected, a receive operation is performed in step S114. After the receive operation is completed, the flow advances to step S110. Similarly, if time over is detected in step S117, the flow advances to step S110.

As has been described above, according to the present invention, power consumption is reduced during a stand-by period by stopping oscillation of a power source during the stand-by period. In addition, since an apparatus is activated in accordance with a manual/automatic activation factor, a communication apparatus having a stand-by function can be realized at lower cost with a smaller size than those of conventional apparatuses can be realized.

In the above embodiments, the present invention is applied to a facsimile apparatus. The present invention, however, is not limited to a facsimile apparatus but can be widely applied to various communication apparatuses such as an automatic answering telephone set and a teletex apparatus.

In addition, the present invention is not limited to the above embodiments but can be variously modified.

As described above, according to the present invention, there is provided a communication apparatus which is simple in arrangement and consumes less power in a stand-by period

## Claims

1. A communication apparatus comprising:
means for starting power supply in accordance with external conditions;
means for supplying power to said apparatus in accordance with a signal from said starting means; and
means for stopping power supply by said power supply means after a predetermined operation such as a communication operation is completed.

2. An apparatus according to claim 1, wherein said power supply means comprises a switching power supply circuit.

3. An apparatus according to claim 1, wherein the external conditions include reception of a calling signal from a calling party.

4. An apparatus according to claim 1, wherein the external conditions include an operation start manual instruction.

5. An apparatus according to claim 1, further comprising means for reading an original sheet and sending a read image,
wherein the external conditions include setting of an original sheet.

6. An apparatus according to claim 1, further comprising control means for performing communication control in response to start of power supply.

7. An apparatus according to claim 6, further comprising means for maintaining power supply in accordance with an output from said control means.

8. An apparatus according to claim 1, wherein said power supply means comprises a dropper type power source circuit.

9. An apparatus according to claim 2, wherein said starting means starts an oscillation operation of said power supply means.

10. An apparatus according to claim 6, wherein said control means determines the external conditions and performs communication control on the basis of the determination result.

11. A communication apparatus comprising:
power source means for starting power supply in accordance with various external conditions;
control means for performing communication control in response to power supply by said power source means; and
means for stopping power supply by said power source means in accordance with an output from said control means,
wherein said control means determines the external conditions which cause power supply and performs communication control in accordance with the determination result.

12. An apparatus according to claim 11, wherein said control means stops power supply after a communication operation is completed.

13. An apparatus according to claim 11, wherein said power source means includes a switching power source circuit and an oscillation control unit for controlling an oscillation operation of said power source circuit.

14. An apparatus according to claim 13, wherein said power source means starts oscillation of said power source circuit in accordance with an input of the external conditions.

15. A communication apparatus comprising:
means for generating various signals for staring power supply;
power source means for performing power supply in accordance with the signals from said signal generating means;
control means for starting a control operation upon power supply by said power source means; and
means for stopping power supply by said power source means in accordance with an output from said control means.

16. An apparatus according to claim 15, wherein said control means determines a type of said signal generating means after the control operation is started and executes the control operation in accordance with the determination result.

17. An apparatus according to claim 15, wherein said signal generating means includes a calling signal detector circuit.

18. An apparatus according to claim 15, wherein said signal generating means includes a generator for generating a manual instruction signal for starting an operation.

19. A communication apparatus of the kind which is required to operate automatically at least upon receipt of an incoming signal and which has means for switching on a power source upon receipt of said signal, characterised in that there is a single power supply circuit which can operate in either stand-by low power mode or full-power mode upon receipt of the external signal.

# FIG. 1

EP 0 358 441 A2

# FIG. 2 PRIOR ART

EP 0 358 441 A2

FIG. 3 PRIOR ART

FIG. 4

## FIG. 5

```
        POWER ON ;
        ACTIVATE CPU

   SET PHLD OF OUTPUT      ── S01
   PORT TO LOW

                          ── S02                         S03
        CI ?          ──Y──►   AUTO RECEIVE
                                OPERATION
          │N
   START 10 SEC TIMER     ── S04

                          ── S05                         S06
      START KEY       ──Y──►   SEND OPERATION OR
      DEPRESSED               RECEIVE OPERATION
         ?
          │N
                          ── S07                         S08
      COPY KEY        ──Y──►   COPY OPERATION OR
      DEPRESSED               FEED OPERATION
          │N
                          ── S09
   N──   TIME OVER ?
          │Y
   SET PHLD OF OUTPUT     ── S10
   PORT TO HIGH

        POWER OFF
```

# FIG. 6

POWER SOURCE

52

18 START SWITCH

Vcc

OSC STOP TR

10

$\overline{\text{PHLD}}$

17 OUTPUT PORT

CPU

12

11

CI

INPUT PORT

GND

16 SHAPING CCT

7 TEL SET

T1

T2

15 16 Hz (CI) DETECTOR CCT

8 LINE

L1

L2

13 CML RELAY

14 NCU

EP 0 358 441 A2

## FIG. 7

POWER ON ;
ACTIVATE CPU

SET $\overline{PHLD}$ OF OUTPUT PORT TO LOW — S21

CI ? — S22

Y → AUTO RECEIVE OPERATION — S23

N

SEND OPERATION OR RECEIVE OPERATION — S24

SET $\overline{PHLD}$ OF OUTPUT PORT TO HIGH — S25

POWER OFF

# FIG. 8

EP 0 358 441 A2

FIG. 9

EP 0 358 441 A2

## FIG. 10A

## FIG. 10

```
┌──────────────────────┐
│  FIG. 10A │ FIG. 10B  │
└──────────────────────┘
```

ACTIVATE CPU

S101 — OUTPUT PHLD SIGNAL TO OUTPUT PORT

S102 — SET TIMER T1

S103 — ORIGINAL SHEET ? — N → (A)

Y

S104 — FEED ORIGINAL SHEET TO READING POSITION

S106 — SEND OPERATION ← Y — START KEY DEPRESSED ? — S105

N

S108 — COPY OPERATION ← Y — COPY KEY DEPRESSED ? — S107

N

TIME OVER ? — N — S109

Y

(B)

RELEASE PHLD SIG OF OUTPUT PORT — S110

CPU OFF

# FIG. 10B